# FASCICULE DE BREVET EUROPEEN

(11) **EP 0 537 044 B1**
(45) Date de publication et mention de la délivrance du brevet: **27.03.1996**
(21) Numéro de dépôt: 92402589.3
(22) Date de dépôt: 21.09.1992
(51) Int. Cl.: G21C 19/307

(54) **Embout inférieur d'un assemblage combustible pour réacteur nucléaire refroidi à l'eau**
Brennstabbündelfusstück für wassergekühlten Kernreaktor
Fuel assembly bottom nozzle for water cooled nuclear reactor

(30) Priorité: 04.10.1991 FR 9112242
(43) Date de publication de la demande: 14.04.1993
(73) Titulaire: FRAMATOME, F-92400 Courbevoie (FR); COGEMA, F-78141 Velizy Villacoublay (FR)
(72) Inventeur: Verdier, Michel, F-69100 Villeurbanne (FR)
(74) Mandataire: Bouget, Lucien

(56) Documents cités:
- EP-A- 0 289 829
- EP-A- 0 422 950
- EP-A- 0 435 744
- US-A- 4 832 905

## Description

L'invention concerne un embout inférieur filtrant d'un assemblage combustible d'un réacteur nucléaire refroidi par de l'eau légère et en particulier d'un réacteur nucléaire à eau sous pression.

Les réacteurs nucléaires à eau sous pression comportent un coeur constitué par des assemblages prismatiques disposés côte à côte en position verticale. Les assemblages comportent une ossature constituée par des tubes-guides longitudinaux et des grilles-entretoises et fermée par des embouts, dans laquelle sont disposés les crayons combustibles.

L'un des embouts des assemblages, appelé embout inférieur, vient reposer sur la plaque inférieure de coeur qui est percée de trous au niveau de chacun des assemblages pour permettre le passage de l'eau de refroidissement du réacteur à travers le coeur dans la direction verticale et de bas en haut.

Un tel embout comporte des pieds-supports qui viennent reposer sur la plaque inférieure du coeur et un élément transversal par rapport à la direction des crayons combustibles du faisceau solidaire des pieds-supports. Cet élément transversal est constitué par une plaque adaptatrice comportant une face supérieure et une face inférieure parallèles entre elles, dans laquelle sont fixées les extrémités inférieures des tubes-guides de l'assemblage et qui est traversée par des ouvertures permettant le passage et assurant la répartition de l'eau de refroidissement du réacteur qui circule suivant la direction verticale et en contact avec la surface extérieure des crayons de l'assemblage, après traversée de l'embout inférieur.

La plaque adaptatrice de l'embout inférieur contribue à la rigidité de l'ossature de l'assemblage, assure la reprise des efforts exercés sur l'embout inférieur et la retenue des crayons combustibles et doit permettre le passage et la répartition de l'eau de refroidissement de l'assemblage.

Des débris de matériau peuvent être présents dans le circuit primaire du réacteur et sont susceptibles d'être entraînés par l'eau sous pression en circulation. Dans le cas où leur taille est faible (par exemple inférieure à 10 mm), ces débris peuvent passer au travers de la plaque adaptatrice de l'embout inférieur dont les trous de passage d'eau ont un diamètre généralement supérieur à 10 mm. Ces débris peuvent venir se coincer entre les crayons combustibles et les éléments de maintien des crayons au niveau de la première grille, c'est-à-dire de la grille-entretoise maintenant les crayons suivant un réseau régulier disposée le plus bas dans l'assemblage. Ces débris soumis aux sollicitations hydrauliques axiales et transversales qui sont importantes dans cette zone peuvent user le gainage du crayon combustible. Il risque d'en résulter une perte d'étanchéité de ce gainage ainsi qu'une augmentation du taux d'activité du circuit primaire du réacteur.

Pour éviter l'entraînement de ces débris à l'intérieur de l'assemblage, on a proposé de réaliser la filtration du fluide de refroidissement, au niveau de la plaque adaptatrice de l'embout inférieur, en prévoyant des trous traversant cette plaque adaptatrice dont le diamètre est suffisamment faible pour arrêter les débris susceptibles de se coincer dans la première grille de l'assemblage.

Les trous de faible diamètre à section circulaire sont disposés suivant un réseau à maille carrée dans toute la section de la plaque adaptatrice. Un tel réseau de trous de faible diamètre entraîne l'apparition d'une forte perte de charge sur la circulation du fluide de refroidissement traversant la plaque adaptatrice.

Le document EP-A-0435744 concerne un embout inférieur d'assemblage combustible constitué par une structure réticulée délimitant des cellules de grandes dimensions, sur laquelle est rapportée une plaque de filtration percée d'ouvertures circulaires et fixée sur des parties isolées en saillie de la structure réticulée.

Une force ascendante est créée dans l'assemblage du fait de la circulation du fluide de refroidissement. Les ressorts anti-envol appliqués sur la plaque supérieure de coeur sont chargés de maintenir un bilan positif des efforts en direction de la plaque inférieure de coeur afin d'éviter un décollement de l'assemblage combustible.

Pour atteindre cet objectif et diminuer les sollicitations auxquelles sont soumis les ressorts anti-envol, il est souhaitable de diminuer la force hydraulique s'exerçant sur l'assemblage combustible. Le moyen consiste à augmenter la transparence au fluide de refroidissement de l'embout inférieur de l'assemblage.

En outre, la plaque adaptatrice doit présenter une rigidité suffisante pour assurer les fonctions de tenue mécanique rappelées plus haut. Il n'est donc pas possible d'augmenter la densité des trous traversant la plaque adaptatrice au-delà d'une certaine limite, à moins d'augmenter l'épaisseur de la plaque adaptatrice, ce qui entraîne à nouveau une augmentation de la perte de charge et une diminution de l'espace réservé au débattement des crayons combustibles.

Le but de l'invention est donc de proposer un embout inférieur à perte de charge réduite d'un assemblage combustible pour un réacteur nucléaire refroidi à l'eau comportant une plaque adaptatrice ayant une disposition transversale, comportant une face supérieure et une face inférieure parallèles entre elles et percée de manière à permettre le passage de l'eau de refroidissement de l'assemblage et l'arrêt de débris entraînés par l'eau de refroidissement, cet embout inférieur permettant de limiter à un niveau extrêmement faible la perte de charge sur la circulation du fluide de refroidissement traversant l'embout et donc les efforts exercés sur les ressorts anti-envol, tout en étant d'une grande rigidité.

Dans ce but, la plaque adaptatrice comporte des nervures assurant sa tenue mécanique sensiblement perpendiculaires à ses faces, en saillie sur sa face inférieure, délimitant entre elles des cellules et des zones de la face inférieure de la plaque adaptatrice dans chacune desquelles débouche un ensemble d'ouvertures traversantes substantiellement à section carrée disposées suivant un réseau.

Afin de bien faire comprendre l'invention on va maintenant décrire, à titre d'exemple non limitatif, en se référant aux figures jointes en annexe, un embout filtrant pour un assemblage combustible d'un réacteur nucléaire à eau sous pression.

La figure 1 est une vue en élévation d'un assemblage combustible d'un réacteur nucléaire à eau sous pression.

La figure 2 est une vue de dessus d'un embout inférieur filtrant suivant l'invention.

La figure 2A est une vue de dessus partielle de l'embout, montrant la forme d'ouvertures traversant la plaque adaptatrice au voisinage d'un tube-guide, dans un mode de réalisation préférentiel.

La figure 3 est une vue en coupe suivant 3-3 de la figure 2.

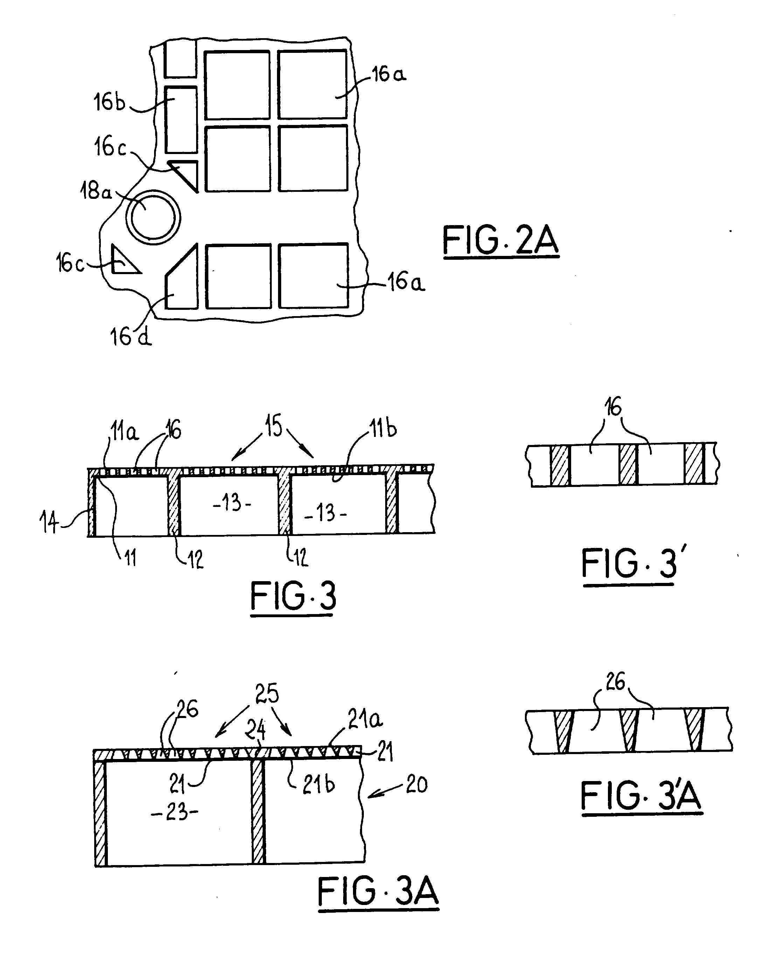

La figure 3′ est une vue de détail à plus grande échelle de la plaque représentée sur la figure 3.

La figure 3A est une vue en coupe à plus grande échelle que la figure 3, montrant la section longitudinale des ouvertures de la plaque adaptatrice, dans une variante de réalisation de l'embout.

La figure 3′A est une vue de détail à plus grande échelle de la plaque représentée sur la figure 3A.

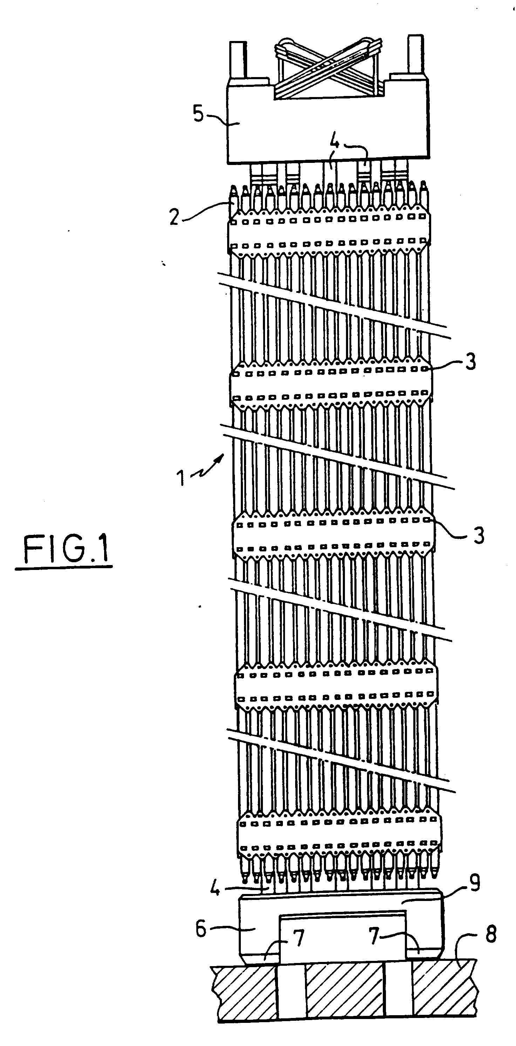

Sur la figure 1, on voit un assemblage combustible désigné de manière générale par le repère 1 et constitué par un faisceau de crayons combustibles parallèles 2 maintenus dans une ossature constituée par des tubes-guides 4 de direction longitudinale, des entretoises transversales 3 et des embouts d'extrémité 5 et 6. Les entretoises 3 sont constituées par des grilles dont les cellules reçoivent chacune un crayon combustible. Certaines positions du réseau des grilles sont occupées par des tubes-guides 4 dont la longueur est supérieure à la longueur des crayons combustibles 2. Chacun des tubes-guides 4 est fixé à l'ensemble des grilles-entretoises qui sont régulièrement espacées suivant la longueur de l'assemblage.

De plus, les tubes-guides sont reliés, à l'une de leurs extrémités, à un embout 5 constituant l'embout supérieur de l'assemblage et, à leur autre extrémité, à un second embout 6 constituant l'embout inférieur.

Dans sa position de service, l'assemblage est placé verticalement, comme représenté sur la figure 1, l'embout inférieur reposant, par l'intermédiaire de pieds 7, sur la surface supérieure de la plaque inférieure de coeur 8 du réacteur nucléaire.

La plaque 8 est percée de quatre trous de passage d'eau débouchant en-dessous de l'embout inférieur 6 correspondant, au niveau de chacun des assemblages combustibles constituant le coeur du réacteur.

Les pieds supports 7 sont solidaires, à leur partie supérieure d'un élément de support transversal 9 sur lequel sont fixées les extrémités inférieures des tubes-guides 4.

L'eau de refroidissement du réacteur traversant la plaque inférieure de coeur 8 par les ouvertures débouchant sous l'embout 6 traverse l'élément transversal 9 qui est percé d'un réseau d'ouvertures sur toute son épaisseur.

De cette manière, l'eau de refroidissement est amenée à circuler dans la direction verticale et de bas en haut en contact avec les crayons combustibles 2 dont elle assure le refroidissement et réalise l'échange thermique.

Dans les dispositions suivant l'art antérieur, l'élément transversal 9 est constitué par une simple plaque adaptatrice plane percée sur toute son épaisseur par un réseau d'ouvertures assurant le passage de l'eau de refroidissement en même temps que la filtration et l'arrêt des débris dont la taille est supérieure à une certaine limite, déterminée par les ouvertures considérées.

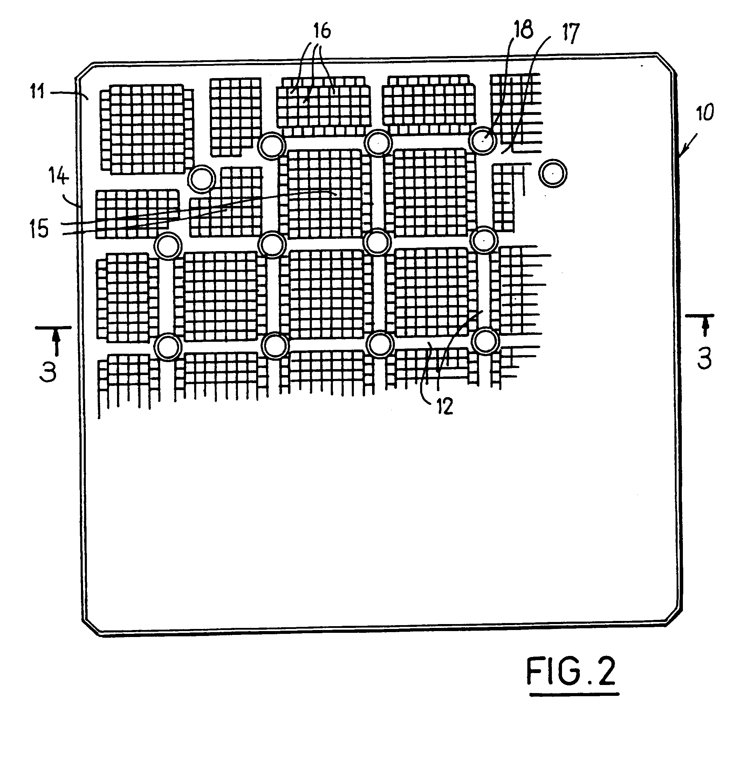

L'embout inférieur suivant l'invention comporte une plaque adaptatrice nervurée dont les trous de passage d'eau et de filtration des débris sont placés dans une disposition particulière, comme il sera décrit en se référant aux figures 2, 3 et 3′.

La plaque adaptatrice 11 de l'embout inférieur 10 suivant l'invention comporte une face supérieure 11a et une face inférieure 11b planes et parallèles entre elles limitant la partie plane de la plaque adaptatrice 11 et un ensemble de nervures de renforcement 12 perpendiculaires aux faces 11a et 11b de la plaque adaptatrice 11 et disposées en saillie par rapport à la face inférieure 11b de la plaque adaptatrice.

L'ensemble de la plaque adaptatrice 11 constituée par la partie plane délimitée par les faces 11a et 11b et les nervures 12 est réalisé en une seule pièce, par exemple par moulage et usinage d'une pièce en acier inoxydable.

L'acier ou l'alliage dont on effectue le moulage aura de préférence l'une des compositions suivantes :
- Acier A286 (Z3CNDTV25-15) : C < 0,08, Ni 24 à 27, Cr 13,5 à 16, Mo 1,00 à 1,50, Ti 1,90 à 2,35, AI < 0,35, U 0,10 à 0,5, Mn < 2,00, Si < 1,00, le reste étant constitué par du fer.
- Acier A151-304 (Z2CN18-10) : C < 0,03, Si < 1,20, Mo < 1,50, Cr 17 à 20, Ni 8 à 12.
- Inconel 718 (NC19FeNb).

La plaque adaptatrice pourrait être également réalisée à partir de deux pièces soudées ensemble, comme il sera décrit plus loin, en regard de la figure 3A relative à un mode de réalisation particulier.

Les nervures 12 sont disposées suivant un réseau dont la plupart des mailles sont de forme carrée ou rectangulaire et délimitent entre elles et avec les parois latérales 14 de l'embout, des cellules 13 ouvertes vers le bas, c'est-à-dire en direction du flux d'eau de refroidissement pénétrant dans l'assemblage combustible.

Les nervures 12 délimitent également des zones 15 de la partie plane de la plaque adaptatrice 11 généralement de forme carrée ou rectangulaire et occupant la plus grande partie de la surface de la plaque adaptatrice. Dans les zones 15, la partie plane de la plaque adaptatrice est percée d'un réseau d'ouvertures traversantes 16 débouchant sur la face inférieure 11b de la plaque adaptatrice entre les nervures 12 et occupant toute la surface des zones 15 comprises entre les nervures 12.

Les ouvertures 16 sont réalisées par perçage de la partie plane de la plaque 11 entre les faces 11a et 11b. Les ouvertures 16 sont toutes sensiblement identiques et substantiellement de forme carrée et présentent une dimension telle que la diagonale des carrés soit sensiblement égale ou légèrement inférieure à la taille minimale des particules entraînées par le fluide de refroidissement dont on veut assurer la retenue par l'embout 10, de manière à éviter que ces particules aillent se coincer dans l'espace entre les crayons et les éléments de retenue de la première grille-entretoise.

La dimension minimale de ces débris et donc la dimension des ouvertures 16 est définie par la dimension des espaces subsistant entre les crayons et les éléments de guidage de la première grille-entretoise.

Les ouvertures 16 de la plaque adaptatrice sont telles également que la plaque adaptatrice puisse assurer la retenue des crayons combustibles dans le cas d'un glissement ou d'un grandissement sous irradiation des crayons. Les crayons viennent alors reposer sur la plaque adaptatrice de l'embout de manière que le fluide de refroidissement puisse encore circuler pour assurer le refroidissement des crayons.

De manière préférentielle, comme il est visible sur la figure 2A, au voisinage d'un tube-guide 18a, une partie des ouvertures 16 peut avoir des formes diverses en section transversale, de manière à s'adapter à la forme des cellules 13 au voisinage du tube-guide et à diminuer au maximum la perte de charge sur la circulation du fluide de refroidissement de l'assemblage. Ces ouvertures peuvent être en particulier de forme carrée 16a, rectangulaire 16b, triangulaire 16c ou trapézoïdale 16d. On augmente ainsi la "transparence" de la plaque adaptatrice qui est traversée par l'eau de refroidissement.

A l'intérieur des cellules, les ouvertures 16 présentent généralement une forme carrée, de sorte que la majeure partie des ouvertures 16 traversant la plaque adaptatrice est constituée d'ouvertures carrées disposées suivant un réseau à maille carrée.

Dans le cas des assemblages combustibles pour réacteur nucléaire à eau sous pression de type classique, l'embout inférieur suivant l'invention comporte une partie plane ayant une épaisseur de quelques millimètres et par exemple de l'ordre de 5 mm. Les nervures 12 présentent une largeur ayant également pour ordre de grandeur quelques millimètres par exemple 5 mm, une longueur de quelques centimètres, et une hauteur dans la direction perpendiculaire aux faces planes de la plaque adaptatrice comprise entre 15 et 30 mm.

Les ouvertures 16 traversant la partie plane de la plaque adaptatrice ont pour la plupart une section carrée dont la dimension du côté est de quelques millimètres. Les ouvertures disposées au voisinage des tubes-guides 18 (voir figure 2A) et le long des bords des cellules 13 peuvent avoir des formes différentes de la forme carrée, de manière à épouser au mieux la forme des cellules.

Les ouvertures 16, comme il est visible sur la figure 2, sont regroupées par paquets ayant la forme d'ensembles occupant les zones 15 de la plaque adaptatrice, de forme carrée, rectangulaire ou légèrement différente de ces formes simples.

Les ouvertures 16 usinées dans le matériau de la plaque adaptatrice sont séparées par des parois minces.

Les ouvertures 16 sont généralement réalisées par perçage de la plaque en utilisant par exemple un jet d'eau abrasif à très haute pression (plusieurs milliers de bars), cette eau étant chargée en particules abrasives (par exemple de corindon). Un tel procédé de perçage et les dispositifs pour le mettre en oeuvre sont bien connus. Avec une machine de perçage à commande numérique, on peut réaliser le perçage d'une plaque selon le réseau tel que représenté sur la figure 2 qui comporte plusieurs milliers de trous. Une telle opération de perçage automatisée peut être réalisée en quelques heures.

Il est bien évident que des réseaux de formes différentes pourraient être réalisés par le même procédé et que d'autres procédés de perçage connus, par exemple par faisceau laser, peuvent être également utilisés, sans pour cela sortir du cadre de la présente invention.

Les nervures 12 sont disposées suivant un réseau dont la position des noeuds correspond à la position des tubes-guides 18 de l'assemblage qui sont fixés à l'intérieur de trous usinés dans la plaque adaptatrice, au niveau des noeuds 17 du réseau des nervures 12, c'est-à-dire dans les zones de croisement de ces nervures où l'épaisseur du métal est relativement forte. La rigidité et la résistance de la plaque adaptatrice sont donc maintenues à une valeur tout-à-fait satisfaisante malgré le perçage nécessaire pour la fixation des tubes-guides.

Les nervures 12 ont pour rôle principal d'assurer une rigidité suffisante à la plaque adaptatrice, bien que la partie plane de cette plaque adaptatrice soit relativement mince et percée sur une très grande partie de sa surface.

Les nervures assurent également le guidage du fluide de refroidissement de l'assemblage vers les zones 15 dans lesquelles est assurée la filtration du fluide.

Les pieds-supports de l'embout, par l'intermédiaire desquels l'assemblage vient reposer sur la plaque inférieure de coeur, sont disposés dans les angles de la plaque adaptatrice, comme dans le cas des embouts suivant l'art antérieur. Ces pieds-supports n'ont pas été représentés sur les figures 2 et 3.

La forme carrée des ouvertures 16 et leur disposition en réseau et sous forme d'ensembles occupant la surface des zones 15 permettent d'augmenter la transparence de la plaque adaptatrice, c'est-à-dire le rapport entre la surface totale des ouvertures 16 et la surface totale de la plaque adaptatrice.

Des formes adaptées pour les ouvertures situées au voisinage des bords des cellules 13 permettent d'augmenter encore la transparence.

Avec une disposition telle que représentée sur la figure 2, on peut obtenir une transparence de l'ordre de 50 % et ainsi un coefficient de perte de pression bien inférieur à celui de l'art antérieur.

Il est donc bien évident que l'embout suivant l'invention présente un avantage considérable par rapport à un embout suivant l'art antérieur percé d'ouvertures circulaires disposées suivant un réseau unique.

L'embout suivant l'invention présente donc à la fois une très bonne rigidité, une très grande résistance mécanique et une forte transparence au fluide de refroidissement. La forte transparence de l'embout inférieur permet d'améliorer l'échange thermique au niveau des crayons combustibles par une meilleure circulation de l'eau de refroidissement et par conséquent de procurer un meilleur rendement du réacteur nucléaire.

Comme il est visible sur les figures 3A et 3′A, l'embout suivant l'invention peut être réalisé non seulement sous forme monobloc par usinage d'une pièce moulée ou d'une plaque épaisse usinée (cas des figures 2 et 3) mais encore en rapportant une plaque adaptatrice plane 21 sur une structure 20 constituée par des parois 22 délimitant un réseau de cellules 23 et en la fixant par soudage (par exemple au laser) suivant des lignes de soudure 24. Les parois 22 constituent alors les nervures de renforcement de la plaque adaptatrice.

La plaque adaptatrice plane 21 et la structure nervurée 20 peuvent être constituées par des matériaux différents, en fonction des propriétés recherchées.

Dans ce cas, le perçage de la plaque rapportée 21 est facilité et les ouvertures 26 substantiellement à section carrée, réalisées dans chacune des cellules 25 peuvent être usinées de manière à présenter- une section accrue à la partie inférieure de la plaque et diminuant en direction de la face supérieure de la plaque adaptatrice pour atteindre la dimension des ouvertures droites représentées sur les figures 3 et 3′.

Ces ouvertures à section accrue sur la face inférieure de la plaque adaptatrice permettent d'accroître le débit traversant l'embout et d'améliorer l'échange thermique, sans diminuer la rigidité et la résistance de l'embout, tout en assurant une retenue efficace des crayons en cas de glissement.

L'invention ne se limite pas au mode de réalisation qui a été décrit.

C'est ainsi qu'on peut envisager des zones 15 dans lesquelles la plaque adaptatrice est percée d'un réseau d'ouvertures carrées d'une forme différente des zones qui ont été représentées sur la figure 2. La forme de ces zones dépend en particulier de la disposition des tubes-guides de l'assemblage. La disposition représentée sur la figure 2 correspond à un assemblage combustible pour réacteur nucléaire à eau sous pression comportant vingt-quatre tubes-guides et un tube d'instrumentation.

Les nervures de renforcement peuvent avoir une forme et des dimensions différentes de celles qui ont été indiquées.

Enfin, l'invention peut s'appliquer non seulement aux assemblages combustibles pour réacteur nucléaire à eau sous pression mais également aux assemblages pour d'autres réacteurs nucléaires refroidis à l'eau légère.

## Revendications

1. Embout inférieur à perte de charge réduite d'un assemblage combustible pour réacteur nucléaire refroidi à l'eau comportant une plaque adaptatrice (11) ayant une disposition transversale, comportant une face supérieure (11a) et une face inférieure (11b) parallèles entre elles et percée de manière à permettre le passage de l'eau de refroidissement de l'assemblage et l'arrêt de débris entraînés par l'eau de refroidissement, caractérisé par le fait que la plaque adaptatrice (11) comporte des nervures (12) assurant sa tenue mécanique sensiblement perpendiculaires à ses faces (11a, 11b), en saillie sur sa face inférieure (11b), délimitant entre elles des cellules (13) et des zones (15) de la face inférieure (11b) de la plaque adaptatrice dans chacune desquelles débouche un ensemble d'ouvertures traversantes (16) substantiellement à section carrée disposées suivant un réseau.

2. Embout suivant la revendication 1, caractérisé par le fait que les nervures (12) sont disposées suivant un réseau à mailles carrées ou rectangulaires, de telle sorte que les cellules (13) et les zones (15) dans lesquelles sont pratiquées les ouvertures (16) ont une forme carrée ou rectangulaire.

3. Embout suivant la revendication 2, caractérisé par le fait que le réseau des nervures de renforcement (12) comporte des noeuds (17) au niveau desquels sont prévues des ouvertures pour la fixation des tubes-guides (18) de l'assemblage combustible.

4. Embout suivant l'une quelconque des revendications 1 à 3, caractérisé par le fait que les ouvertures (16a, 16b, 16c, 16d) traversant la plaque adaptatrice (11) présentent au moins l'une des formes géométriques suivantes : rectangulaire, triangulaire, trapézoïdale, au voisinage des nervures (12) constituant les bords des zones (15).

5. Embout suivant l'une quelconque des revendications 1 à 4, caractérisé par le fait qu'il est constitué par une seule pièce moulée et usinée en acier inoxydable ou en alliage de nickel.

6. Embout suivant la revendication 5 caractérisé par le fait qu'il est réalisé en l'un des matériaux suivants : acier A286 (Z3CNDTV25-15), acier A151-304 (Z2CN18-10), alliage de nickel (NC19FeNb).

7. Embout suivant l'une quelconque des revendications 1 à 4, caractérisé par le fait qu'il est constitué par une plaque plane (21) percée d'ouvertures (26) et fixée par soudage sur une structure (20) comportant des parois (22) délimitant des cellules (23) destinées à constituer les nervures de la plaque adaptatrice.

8. Embout suivant la revendication 7, caractérisé par le fait que les ouvertures (26) de la plaque plane (21) ont une section accrue sur la face inférieure (21b) de la plaque adaptatrice (21) et diminuant en direction de la face supérieure (21a).

9. Embout suivant l'une quelconque des revendications 7 et 8, caractérisé par le fait que la plaque plane (21) et la structure (20) sont constitués par des matériaux différents.

## Patentansprüche

1. Unteres Ansatzstück mit reduziertem Druckverlust einer Brennelementkassette für wassergekühlte Kernreaktoren mit einer quer angeordneten Adapterplatte (11), die eine Oberseite (11a) und eine Unterseite (11b) aufweist, die parallel zueinander und durchlöchert sind, derart, daß sie den Durchgang des Kühlwassers der Kassette ermöglichen und Splitter bzw. Späne auffangen, die von dem Kühlwasser transportiert werden,
**dadurch gekennzeichnet**, daß
die Adapterplatte (11) Rippen (12) aufweist, die deren mechanische Halterung ungefähr senkrecht zu ihren Oberflächen (11a, 11b) gewährleisten, wobei die Rippen auf ihrer Unterseite (11b) vorstehen und untereinander Zellen (13) und Bereiche (15) der Unterseite (11b) der Adapterplatte eingrenzen, in denen jeweils eine Gruppe von Durchgangsöffnungen (16) mündet, mit im wesentlichen rechteckigem Querschnitt, die auf einem Gitter angeordnet sind.

2. Unteres Ansatzstück nach Anspruch 1,
dadurch gekennzeichnet, daß
die Rippen (12) auf einem quadratischen oder rechtwinkligen Gitter angeordnet sind, derart, daß die Zellen (13) und die Bereiche (15), in denen die Öffnungen (16) angeordnet sind, eine quadratische oder rechtwinklige Form aufweisen.

3. Endstück nach Anspruch 2,
dadurch gekennzeichnet, daß
das Gitter der Verstärkungsrippen (12) Kreuzungspunkte (17) aufweist, an deren Ort Öffnungen zur Befestigung von Führungsrohren (18) der Brennelementkassette vorgesehen sind.

4. Ansatzstück nach einem der Ansprüche 1 bis 3,
dadurch gekennzeichnet, daß
die die Adapterplatte (11) durchquerenden Durchgangsöffnungen (16a, 16b, 16c, 16d) in der Nähe der Rippen (12), die die Bereichsgrenzen (15) darstellen, mindestens eine der folgenden geometrischen Formen aufweisen: rechtwinklig, dreieckig, trapezförmig.

5. Ansatzstück nach einem der Ansprüche 1 bis 4,
dadurch gekennzeichnet, daß
es aus einem einzigen Stück Edelstahl oder einer Nikkellegierung gegossen und bearbeitet ist.

6. Ansatzstück nach Anspruch 5,
dadurch gekennzeichnet, daß
es aus einem der nachfolgenden Materialien hergestellt ist: Stahl A286 (Z3CNDTV25-15), Stahl A151-304 (Z2CN18-10), Nickellegierung (NC19FeNb).

7. Ansatzstück nach einem der Ansprüche 1 bis 4,
dadurch gekennzeichnet, daß
es aus einer ebenen Platte (21) besteht, die mit Durchgangsöffnungen (26) versehen ist und durch Verschweißen auf einer Struktur (20) befestigt ist, die Wandungen (22) aufweist, die die Zellen (23) begrenzen und die dazu bestimmt sind, die Rippen der Adapterplatte zu bilden.

8. Ansatzstück nach Anspruch 7,
dadurch gekennzeichnet, daß
die Öffnungen (26) der ebenen Platte (21) einen vergrößerten Querschnitt auf der Unterseite (21b) der Adapterplatte (21) haben, der in Richtung auf die obere Oberfläche (21a) abnimmt.

9. Ansatzstück nach einem der Ansprüche 7 und 8,
dadurch gekennzeichnet, daß
die ebene Platte (21) und die Struktur (20) aus verschiedenen Materialien bestehen.

## Claims

1. Bottom nozzle, with a reduced loss of charge, of a fuel assembly for a water-cooled nuclear reactor, comprising an adapter plate (11) arranged transversely, comprising an upper surface (11a) and a lower surface (11b) which are parallel to each other and perforated so as to allow the coolant of the assembly to pass through and to stop any debris carried along by the coolant, characterised in that the adapter plate (11) has ribs (12) ensuring the mechanical strength thereof substantially perpendicular to its surfaces (11a, 11b), projecting from its lower surface (11b), defining between them cells (13) and zones (15) of the lower surface (11b) of the adapter plate, into each of which opens a set of through-holes (16) of substantially square cross section arranged in a grid.

2. Nozzle according to claim 1, characterised in that the ribs (12) are arranged in a grid of square or rectangular mesh, so that the cells (13) and the zones (15) in which the holes (16) are formed are square or rectangular in shape.

3. Nozzle according to claim 2, characterised in that the grid of reinforcing ribs (12) comprises nodes (17) at which openings are provided for the attachment of the guide tubes (18) of the fuel assembly.

4. Nozzle according to any one of claims 1 to 3, characterised in that the openings (16a, 16b, 16c, 16d) passing through the adapter plate (11) have at least one of the following geometric shapes: rectangular, triangular or trapezoidal, in the vicinity of the ribs (12) which constitute the edges of the zones (15).

5. Nozzle according to any one of claims 1 to 4, characterised in that it consists of a single moulded, machined component made from stainless steel or nickel alloy.

6. Nozzle according to claim 5, characterised in that it is made from one of the following materials: A286 steel (Z3CNDTV25-15), A151-304 steel (Z2CN18-10) or nickel alloy (NC19FeNb).

7. Nozzle according to any one of claims 1 to 4, characterised in that it consists of a flat plate (21) perforated with openings (26) and fixed by welding to a structure (20) comprising walls (22) defining cells (23) intended to constitute the ribs of the adapter plate

8. Nozzle according to claim 7, characterised in that the openings (26) in the flat plate (21) have a section which is larger on the lower surface (21b) of the adapter plate (21) and decreases towards the upper surface (21a).

9. Nozzle according to any one of claims 7 and 8, characterised in that the flat plate (21) and the structure (20) consist of different materials.
